# EUROPÄISCHE PATENTSCHRIFT

(11) **EP 2 386 843 B1**
(45) Veröffentlichungstag und Bekanntmachung des Hinweises auf die Patenterteilung: **03.08.2016**
(21) Anmeldenummer: 10162481.5
(22) Anmeldetag: 11.05.2010
(51) Int. Cl.: G01K 1/08, G01K 1/14, G01K 7/02, G01K 13/02

(54) **Thermoelement**
Thermocouple
Thermocouple

(43) Veröffentlichungstag der Anmeldung: 16.11.2011
(73) Patentinhaber: Innovatherm Prof. Dr. Leisenberg GmbH & Co. KG, 35510 Butzbach (DE)
(72) Erfinder: Hoßbach, Christian, 35321, Laubach-Lauter (DE); Krieg, Peter, 99425, Weimar (DE); Maiwald, Detlef, 47447, Moers (DE); Mnikoleiski, Hans-Peter, 47269, Duisburg (DE); Uhrig, Wolfgang, 35321, Laubach-Gonterskirchen (DE)
(74) Vertreter: Engelhardt & Engelhardt

(56) Entgegenhaltungen:
- GB-A- 880 605
- US-A- 4 428 686
- US-A- 5 678 926

## Beschreibung

Die Erfindung bezieht sich auf ein Thermoelement zur Temperaturmessung in gasförmigen oder flüssigen Medien mittels einer oder mehrere Thermopaare, die aus verschiedenartigen Metallen zusammengeschweißter Drähte bestehen, bei Erwärmung eine resultierende elektrische Spannung abgeben und als in einem Isolierstab angeordneter Messeinsatz ausgebildet sind, der in einem mit einem Anschlusskopf verbindbaren hitzebeständigen Schutzrohr, das ganz oder teilweise von einem Halterohr umgeben ist, eingesetzt ist.

Derartige Thermoelemente sind in zahlreichen unterschiedlichen Ausgestaltungen bekannt und haben sich in der Praxis zur Temperaturmessung in Thermoprozessanlagen auch bewährt. Beispiele sind u.a. in US4428686A, US5678926A und GB880605A zu finden.

Je nach Anwendungsfall sind zwar das Schutzrohr und/oder auch das Halterohr aus mehr oder weniger hitzebeständigen Materialien hergestellt, an den Kontaktflächen des Schutzrohres und/oder des Halterohres ist jedoch insbesondere am Anschlusskopf der Wärmeeintrag erheblich. Dies führt zu Beeinträchtigungen und damit zu Ungenauigkeiten des Messergebnisses, so dass mitunter fehlerhafte Temperaturangaben in Kauf zu nehmen sind.

Aufgabe der Erfindung ist es daher, ein Thermoelement der vorgenannten Art in der Weise auszubilden, dass ein hoher Wärmeeintrag, durch den eine Temperaturmessung ungünstig beeinflusst wird, vermieden wird. Vielmehr soll erreicht werden, dass der Anschlusskopf weitgehend wärmeisoliert ist, dass somit fehlerbehaftete Temperaturmessungen nahezu ausgeschlossen sind und dass das Thermoelement unempfindlich gegenüber Thermoschocks ist. Der Bauaufwand, mit dem dies zu erreichen ist, soll gering gehalten werden, dennoch soll bei einfacher Ausgestaltung eine hohe Messgenauigkeit gegeben sein.

Gemäß der Erfindung wird dies bei einem Thermoelement der eingangs genannten Gattung dadurch erreicht, dass das Halterohr mit radialem Abstand zu dem Schutzrohr an diesem abgestützt ist, dass zwischen dem Schutzrohr und dem Halterohr eine hitzebeständige Fadenschnur und gegebenenfalls ein Isoliermaterial eingesetzt sind und dass das Halterohr in einem oder beiden Endbereichen wärmeisoliert am Anschlusskopf und/oder dem Schutzrohr befestigt ist.

Die Fadenschnur sollte hierbei aus einem hitzebeständigen vzw. keramischen Werkstoff bestehen und schraubenlinienförmig zwischen dem Schutzrohr und dem Halterohr angeordnet sein. Außerdem sollte die Fadenschnur, um im Betrieb Lageänderungen zu vermeiden, an der Aussenmantelfläche des Schutzrohres und/oder des Halterohres befestigt, vorzugsweise an diesen angeklebt sein.

Außerdem ist es angebracht, den zwischen dem Schutzrohr und dem Halterohr gebildeten Luftspalt, der auch als thermischer Isolator wirksam ist, zur Aufnahme der Fadenschnur auf beiden Seiten zu verschließen oder auf eine lichte Weite zu verengen, die kleiner bemessen ist als der Durchmesser der Fadenschnur.

Um beim Einbau des Thermoelementes Beschädigungen durch zu hartes Aufsetzen des Standfußes auf das zugeordnete Bauteil der Thermoprozessanlage zu vermeiden, ist nach einer andersartigen Ausgestaltung vorgesehen, das zwischen dem Anschlusskopf und dem Standfuß angeordnete Halterohr in zwei Teilstücke zu unterteilen und zwischen den beiden Teilstücken eine Schraubendruckfeder einzusetzen, die an den Teilstücken abgestützt ist, wobei die Schraubendruckfeder in ihren Endbereichen jeweils fest mit den beiden Teilstücken, vorzugsweise durch Einbörteln, verbunden sein sollte.

Die Fadenschnur ist bei dieser Ausgestaltung nur in dem an dem Anschlusskopf befestigten Teilstück des Halterohres vorzusehen und in den Endbereichen fest mit dem Anschlusskopf und dem zugeordneten Teilstück, z.B. durch Einbörteln, fest zu verbinden oder an dem Teilstück und oder dem Schutzrohr anzukleben.

Nach einer Weiterbildung ist vorgesehen, das Halterohr auf der dem Messeinsatz zugekehrten Seite mit einem radial abstehenden vorzugsweise als Flansch ausgebildeten Standfuß auszustatten und über eine oder mehrere zwischen dem Standfuß und dem Messeinsatz eingesetzte Isolier- oder Dichtungsscheiben wärmeisolierend an diesem zu befestigen. Auch das Halterohr sollte auf der dem Anschlusskopf zugekehrten Seite über eine oder mehrere zwischen diesem oder dem Halterohr angeordnete Isolier- oder Dichtungsscheiben wärmeisolierend mit dem Anschlusskopf verbunden sein.

Zweckmäßig ist es ferner, das Halterohr auf der dem Anschlusskopf zugekehrten Seite verdrehfest an dem Schutzrohr abzustützen, in dem das Halterohr mit einem teilweise offenen Flansch versehen wird, der eine oder mehrere Nuten aufweist, in die das Schutzrohr mit jeweils einem im äußeren Randbereich axial abstehenden Ansatz eingreift.

Das Schutzrohr und/oder das Halterohr können aufgrund dieser Ausgestaltung aus einem gasdichten hitzebeständigen Werkstoff aus Siliziumkarbid bestehen, so dass dieses unempfindlich gegen Thermoschocks ist.

Wird ein Thermoelement gemäß der Erfindung ausgebildet, so ist die Gewähr gegeben, dass ein Wärmeeintrag in den Anschlusskopf über das Halterohr, obwohl dieses aus Siliziumkarbid hergestellt werden kann, und somit Verfälschungen der Messergebnisse nahezu ausgeschlossen sind. Durch die wärmeisolierende Anordnung des Schutzrohres gegenüber dem Halterohr und auch dessen wärmeisolierende Anbringung am Anschlusskopf ist nämlich sichergestellt, dass der Anschlusskopf durch Wärmeeinleitungen nicht beeinflusst wird. Und da das Halterohr verdrehfest am dem Schutzrohr abgestützt ist und unterteilt ausgebildet sein kann, sind eine betriebssichere Bauweise sowie ein Einbau des Thermoelementes, ohne das dabei Beschädigungen in Kauf zu nehmen sind, gegeben. Mit geringem Aufwand ist demnach ein Thermoelement geschaffen, das über einen langen Zeitraum temperaturgenaue Messungen in Thermoprozessanlagen auch oberhalb 1200°C ermöglicht und keinerlei Empfindlichkeiten durch Thermoschocks, beispielsweise bei ortsveränderlichen Messpositionen aufweist.

In der Zeichnung ist ein Ausführungsbeispiel eines gemäß der Erfindung ausgebildeten Thermoelementes dargestellt, das nachfolgend im Einzelnen näher erläutert ist. Hierbei zeigen:
- Figur 1: das Thermoelement in Ansicht und teilweise im Schnitt,
- Figur 2: das in das Halterohr eingreifende Schutzrohr bei dem Thermoelement nach Figur 1, in einer vergrößerten Darstellung und in einem Axialschnitt, und
- Figur 3: eine Ausführungsvariante mit einem unterteilten Halterohr in einer Darstellung nach Figur 2.

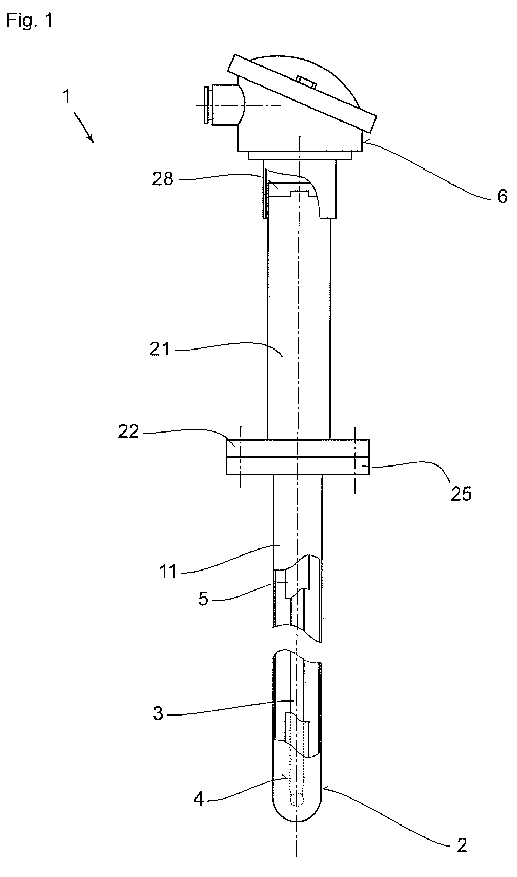

Das in Figur 1 dargestellte und mit 1 bezeichnete Thermoelement dient zur Messung von Temperaturen in gasförmigen oder flüssigen Medien in Thermoprozessanlagen und weist einen Messeinsatz 2 auf, der an einem Anschlusskopf 6 angebracht und von einem Schutzrohr 11 und einem Halterohr 21 umgeben ist. Der Messeinsatz 2 besteht hierbei aus einem Isolierstab 3, einem Innenrohr 5 und Thermopaare 4, die aus verschiedenartigen Metallen zusammengeschweißter Drähte gebildet sind.

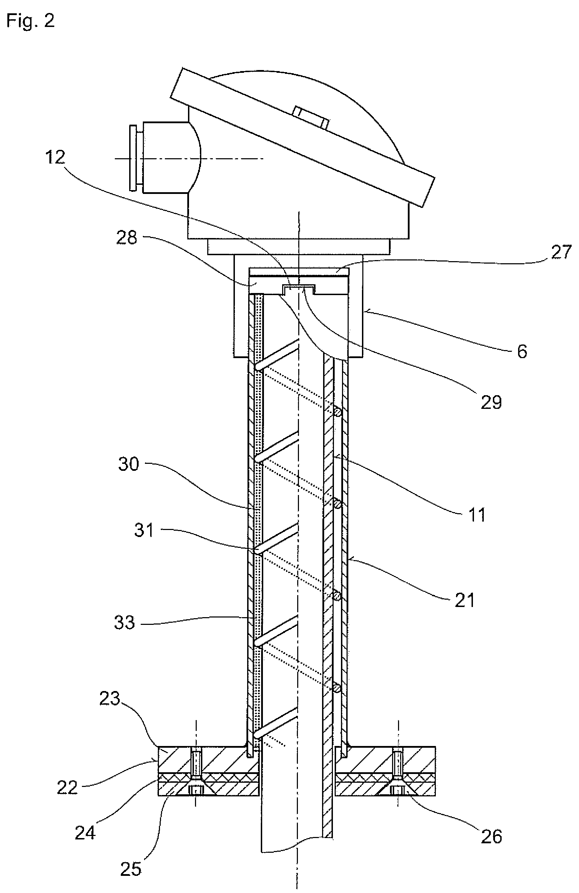

Um einen hohen Wärmeeintrag in den Anschlusskopf 6 zu vermeiden, ist das Halterohr 21 mit radialem Abstand zu dem Schutzrohr 11 angeordnet, so dass zwischen diesen ein mehr oder weniger großer Luftspalt 30 gebildet ist. Mittels einer Fadenschnur 31 aus einem hitzebeständigen vzw. keramischen Werkstoff, die schraubenlinienförmig in dem Luftspalt 30 angeordnet, auf dem Schutzrohr 11 aufgewickelt und mit diesem und/oder dem Halterohr 21 verklebt ist, ist das Halterohr 21 auf dem Schutzrohr 11 abgestützt. Der Luftspalt 30 wirkt hierbei als thermischer Isolator. Gegebenenfalls kann in den Luftspalt 30 zusätzlich, wie dies in Figur 2 teilweise eingezeichnet ist, Isoliermaterial 33 eingefüllt werden.

Das Halterohr 21, das wie auch das Schutzrohr 11 aus Siliziumkarbid hergestellt sein kann, ist bei der Ausgestaltung nach Figur 2 einstückig gestaltet und auf der dem Anschlusskopf 6 zugewandten Seite mit einem Flansch 28 versehen, in den im äußerem Randbereich radial gerichtete Nuten 29 eingearbeitet sind. Das Schutzrohr 11 weist dagegen mit den Nuten 29 korrespondierende Ansätze 12 aus, die in die Nuten 29 eingreifen, so dass das Schutzrohr 11 drehfest mit dem Halterohr 21 verbunden und somit gesichert ist. Die Thermoleitungen können durch den Flansch 28 in den Anschlusskopf 6 eingeführt werden.

Auf der dem Messeinsatz 2 zugewandten Seite ist das Schutzrohr 11 des Weiteren mit einem als Standfuß 22 ausgebildeten radial abstehenden Flansch 23 ausgestattet, an dem mittels einer Flanschplatte 25 und Schrauben 26 eine Dichtungs- und Isolierscheibe 24 befestigt ist. Auch zwischen dem Flansch 28 und dem Anschlusskopf 6 ist eine Dichtungs- und Isolierscheibe 27 vorgesehen, so dass das Halterohr 21 in beiden Endbereichen einerseits an dem Anschlusskopf 6 und andererseits an der Flanschplatte 25, mit der der Standfuß 22 verbunden ist, wärmeisolierend abgestützt ist.

Der Wärmeeintrag in den Anschlusskopf 6 über das Halterohr 21 und das Schutzrohr 11 ist demnach gering, die mittels des Messeinsatzes 2 ermittelten Temperaturwerte werden demnach nicht ungünstig beeinträchtigt, so dass fehlerhafte Temperaturmessungen vermieden sind.

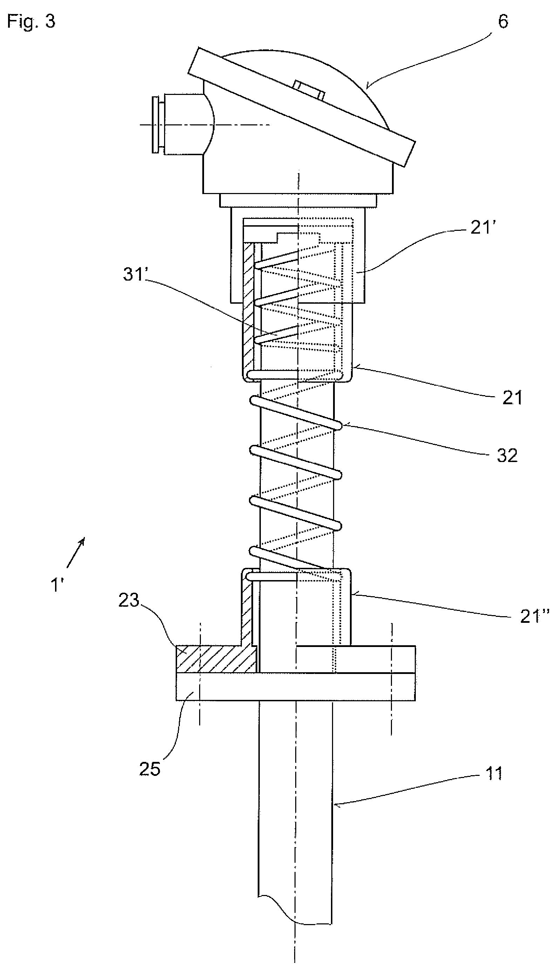

Bei der in Figur 3 dargestellten Ausgestaltung des Thermoelementes 1 ist das Halterohr 21 in zwei Teilstücke 21' und 21" unterteilt ausgebildet, und zwischen den beiden Teilstücken 21' und 21" ist eine Schraubendruckfeder 32 angeordnet, die an den Teilstücken 21' und 21" abgestützt ist. Durch Einbörteln der einander gegenüberliegenden Enden der Teilstücke 21' und 21" ist die Schraubendruckfeder 32 mit diesen fest verbunden. Außerdem ist, um einen Wärmeeintrag in den Anschlusskopf 6 weitgehend zu vermeiden, lediglich zwischen dem Schutzrohr 11 und dem Teilstück 21' die hitzebeständige Fadenschnur 31' ortsfest angeordnet.

Der Standfuß 22 ist somit begrenzt verschiebbar auf dem Schutzrohr 11 aufgesetzt, so dass Beschädigungen des Thermoelementes 1, insbesondere des mitunter spröden Schutzrohres 11 z.B. durch zu hartes Aufsetzen des Standfußes 22 auf das zugeordnete Bauteil einer Thermoprozessanlage, weitgehend vermieden werden.

## Patentansprüche

1. Thermoelement (1) zur Temperaturmessung in gasförmigen oder flüssigen Medien mittels einer oder mehrerer Thermopaare (4), die aus verschiedenartigen Metallen zusammengeschweißten Drähten bestehen, die bei Erwärmung eine resultierende elektrische Spannung abgeben und die in einem Isolierstab (3) angeordnet sind, wobei die Thermopaare (4), der Isolierstab (3) und ein Innenrohr (5) einen Messeinsatz (2) bilden , der in einem mit einem Anschlusskopf (6) verbindbaren hitzebeständigen Schutzrohr (11) eingesetzt ist, das ganz oder teilweise von einem Halterohr (21) umgeben ist,
**dadurch gekennzeichnet,**
**dass** das Halterohr (21) mit radialem Abstand zu dem Schutzrohr (11) an diesem abgestützt ist, dass zwischen dem Schutzrohr (11) und dem Halterohr (21) eine hitzebeständige Fadenschnur (31) und gegebenenfalls ein Isoliermaterial (33) eingesetzt sind und dass das Halterohr (21) in einem oder beiden Endbereichen wärmelisoliert am Anschlusskopf (6) und/oder dem Schutzrohr (11) befestigt ist.

2. Thermoelement nach Anspruch 1,
**dadurch gekennzeichnet,**
**dass** die Fadenschnur (31) aus einem hitzebeständigen bzw. keramischen Werkstoff hergestellt ist.

3. Thermoelement nach Anspruch 1 oder 2,
**dadurch gekennzeichnet,**
**dass** die Fadenschnur (31) schraubenlinienförmig zwischen dem Schutzrohr (11) und dem Halterohr (21) angeordnet ist.

4. Thermoelement nach einem der Ansprüche 1 bis 3,
**dadurch gekennzeichnet,**
**dass** die Fadenschnur (31) an der Aussenmantelfläche des Schutzrohres (11) und/oder an der Innenmantelfläche des Halterohres (21) befestigt, vorzugsweise an diesen angeklebt ist.

5. Thermoelement nach einem der Ansprüche1 bis 4,
**dadurch gekennzeichnet,**
**dass** der zwischen dem Schutzrohr (11) und dem Halterohr (21) gebildete Luftspalt (30) zur Aufnahme der Fadenschnur (31) auf beiden Seiten verschlossen oder auf eine lichte Weite verengt, die kleiner bemessen als der Durchmesser der Fadenschnur (31), ausgebildet ist.

6. Thermoelement nach einem der Ansprüche 1 bis 5,
**dadurch gekennzeichnet,**
**dass** das zwischen dem Anschlusskopf (6) und einem Standfuß (22) vorgesehene Halterohr (21) in zwei Teilstücke (21', 21") unterteilt ausgebildet ist und dass zwischen den beiden Teilstücken (21', 21") des Halterohres (21) eine Schraubendruckfeder (32) angeordnet ist, die an den Teilstücken (21', 21") abgestützt ist,

7. Thermoelement nach Anspruch 6,
**dadurch gekennzeichnet,**
**dass** die Schraubendruckfeder (32) in ihren Endbereichen jeweils fest mit den beiden Teilstücken (21', 21") des Halterohres (21), vorzugsweise durch Einbördeln, verbunden ist.

8. Thermoelement nach Anspruch 6 und 7,
**dadurch gekennzeichnet,**
**dass** die Fadenschnur (31) in dem an dem Anschlusskopf (6) befestigten Teilstück (21') des Halterohres (21) eingesetzt und in den Endbereichen mit dem Anschlusskopf (6) und dem zugeordneten Teilstück (21') des Halterohres (21), z.B. durch Einbördeln, fest verbunden oder an dem Teilstück (21) und oder dem Schutzrohr (11) angeklebt ist.

9. Thermoelement nach einem der Ansprüche 1 bis 8,
**dadurch gekennzeichnet,**
**dass** das Halterohr (21) auf der dem Messeinsatz (2) zugekehrten Seite mit einem radial abstehenden, vorzugsweise als Flansch (23) ausgebildeten Standfuß (22) versehen und über eine oder mehrere zwischen dem Standfuß (22) und dem Messeinsatz (2) eingesetzte Isolier- oder Dichtungsscheiben (24) wärmeisolierend an diesem befestigt ist.

10. Thermoelement nach einem der Ansprüche 1 bis 9,
**dadurch gekennzeichnet,**
**dass** das Halterohr (21) auf der dem Anschlusskopf (6) zugekehrten Seite über eine oder mehrere zwischen diesem oder dem Halterohr (21) eingesetzte Isolier- oder Dichtungsscheiben (27) wärmeisolierend mit dem Anschlusskopf (6) verbunden ist.

11. Thermoelement nach einem der Ansprüche 1 bis 10,
**dadurch gekennzeichnet,**
**dass** das Halterohr (21) auf der dem Anschlusskopf (6) zugekehrten Seite verdrehfest an dem Schutzrohr (21) abgestützt ist.

12. Thermoelement nach Anspruch 11,
**dadurch gekennzeichnet,**
**dass** zur drehfesten Verbindung des Halterohres (21) dieses mit einem teilweise offenen Flansch (28) versehenen ist, der eine oder mehrere Nuten (29) aufweist, in die das Schutzrohr (11) mit jeweils einem im äußeren Randbereich axial abstehenden Ansatz (12) eingreift.

13. Thermoelement nach einem der Ansprüche 1 bis 12,
**dadurch gekennzeichnet,**
**dass** das Schutzrohr (11) aus einem gasdichten hitzebeständigen Werkstoff aus Siliziumkarbid besteht.

## Claims

1. A thermoelement (1) for measuring the temperature in gaseous or fluid media by means of one or more thermocouples (4) comprising wires made from different kinds of metals welded together which give off a resulting electrical voltage when heated and are configured as a measuring insert (2) arranged in an insulating rod (3) inserted in a heat-resistant protective tube (11) that can be connected to a connection head (6), in which case the protective tube (11) is wholly or partially surrounded by a holding tube (21),
**characterised in that,**
the holding tube (21) is supported against the protective tube (11) at a radial distance from the protective tube (11), that a heat-resistant trace (31) and, possibly, an insulating material (33) are inserted between the protective tube (11) and the holding tube (21), and that the holding tube (21) is attached to the connection head (6) and/or the protective tube (11) in one or both end areas with thermal insulation.

2. The thermoelement in accordance with Claim 1,
**characterised in that,**
the trace (31) is made from a heat-resistant or ceramic material.

3. The thermoelement in accordance with Claim 1 or 2,
**characterised in that,**
the trace (31) is arranged in a helical profile between the protective tube (11) and the holding tube (21).

4. The thermoelement in accordance with one of the Claims 1 to 3,
**characterised in that,**
the trace (31) should be attached to the outer jacket surface of the protective tube (11) and/or the inner jacket surface of the holding tube (21), and preferably glued onto it/them.

5. The thermoelement in accordance with one of the Claims 1 to 4,
**characterised in that,**
the air gap (30) between the protective tube (11) and the holding tube (21) is closed at both ends in order to hold the trace (31) or else it is constricted to result in a clearance that is smaller than the diameter of the trace (31).

6. The thermoelement in accordance with one of the Claims 1 to 5,
**characterised in that,**
the holding tube (21) arranged between the connection head (6) and the support leg (22) is divided into two sections (21', 21"), and that a coil compression spring (32) is arranged between the two sections (21', 21") of the holding tube (21) so that the coil compression spring (32) is supported against the sections (21', 21").

7. The thermoelement in accordance with Claim 6,
**characterised in that,**
the end areas of the coil compression spring (32) are firmly connected to the two sections (21', 21 ") of the holding tube (21), preferably by means of crimping.

8. The thermoelement in accordance with Claims 6 and 7,
**characterised in that,**
the trace (31) is inserted in the section (21') of the holding tube (21) attached to the connection head (6) and, in the end areas, is firmly connected to the connection head (6) and the corresponding section (21') of the holding tube (21), e.g. by means of crimping, or is glued onto the section (21) or the protective tube (11).

9. The thermoelement in accordance with one of Claims 1 to 8,
**characterised in that,**
the holding tube (11) is provided on the side facing the measuring insert (2) with a radially projecting support leg (22) configured, in a preferred embodiment, as a flange (23) and is attached to this in a thermally insulated manner by means of one or more insulating or sealing discs (24) inserted between the support leg (22) and the measuring insert (2).

10. The thermoelement in accordance with one of Claims 1 to 9,
**characterised in that,**
the holding tube (21) is connected to the connection head (6) on the side facing the latter by means of one or more insulating or sealing discs (24) located between the connection head (6) or the holding tube (21) with thermal insulating properties.

11. The thermoelement in accordance with one of Claims 1 to 10,
**characterised in that,**
the holding tube (21) is supported against the protective tube (21) on the side facing the connection head (6) in a torsionally rigid arrangement.

12. The thermoelement in accordance with Claim 11,
**characterised in that,**
the holding tube (21) is provided with a partially open flange (28) with one or more grooves (29) into which the protective tube (11) engages with an axially projecting shoulder (12) for each located in the outer edge area.

13. The thermoelement in accordance with one of Claims 1 to 12,
**characterised in that,**
the protective tube (11) is made from a gas-tight, heat resistant material composed of silicon carbide.

## Revendications

1. Thermocouple (1) servant à la mesure de la température dans des milieux gazeux ou liquides, moyennant un ou plusieurs couples thermoélectriques (4) composés de fils soudés à partir de métaux différents, qui produisent au réchauffement une tension électrique et qui sont arrangés dans une barre isolante (3), les couples thermoélectriques (4), la barre isolante (3) et un tube intérieur (5) formant un élément de mesure (2) monté dans un tube protecteur (11) résistant à la chaleur et qui se laisse lier à une tête de raccordement (6), le tube protecteur (11) se trouvant entièrement ou partiellement dans un tube de support (21),
**caractérisé en ce que**
le tube de support (21) s'appuie à une certaine distance radiale du tube protecteur (11) sur celui-ci, qu'entre le tube protecteur (11) et le tube de support (21), il est inséré une ficelle (31) résistant à la chaleur ou, le cas échéant, un matériel isolant (33), et qu'une extrémité ou les deux extrémités du tube de support (21) sont fixées avec un isolement thermique à la tête de raccordement (6) ou au tube protecteur (11).

2. Thermocouple d'après la revendication 1,
**caractérisé en ce que**
la ficelle (31) est réalisée en matériau résistant à la chaleur ou en matériau céramique.

3. Thermocouple d'après les revendications 1 ou 2,
**caractérisé en ce que**
la ficelle (31) est disposée en ligne hélicoïdale entre le tube protecteur (11) et le tube de support (21).

4. Thermocouple d'après une des revendications 1 à 3,
**caractérisé en ce que**
la ficelle (31) est fixée, de préférence collée, sur l'enveloppe extérieure du tube protecteur (11) et/ou sur l'enveloppe intérieure du tube de support (21).

5. Thermocouple d'après une des revendications 1 à 4,
**caractérisé en ce que**
pour recevoir la ficelle (31), l'interstice (30) entre le tube protecteur (11) et le tube de support (21) est fermé sur les deux côtés ou rétréci de sorte que sa largeur intérieure est inférieure au diamètre de la ficelle (31).

6. Thermocouple d'après une des revendications 1 à 5,
**caractérisé en ce que**
le tube de support (21) prévu entre la tête de raccordement (6) et un pied (22) est subdivisé en deux pièces partielles (21', 21") et qu'entre les deux pièces partielles (21', 21 ") du tube de support (21), il est monté un ressort de pression cylindrique (32) qui s'appuie sur les pièces partielles (21', 21").

7. Thermocouple d'après la revendication 6,
**caractérisé en ce que**
aux extrémités, le ressort de pression cylindrique (32) est raccordé rigidement aux deux pièces partielles (21', 21") du tube de support (21), de préférence par sertissage.

8. Thermocouple d'après les revendication 6 et 7,
**caractérisé en ce que**
la ficelle (31) est insérée dans la pièce partielle (21') du tube de support (21), qui est fixée à tête de raccordement (6), et fixée rigidement avec ses extrémités, p. ex. par sertissage, à la tête de raccordement (6) et à la pièce partielle correspondante (21') du tube de support (21) ou qu'elle est collée à la pièce partielle (21) et/ou au tube protecteur (11).

9. Thermocouple d'après une des revendications 1 à 8,
**caractérisé en ce que**
sur la face donnant sur l'élément de mesure (2), le tube de support (21) possède un pied (22) saillant radialement et conçu de préférence sous la forme d'une bride (23), et qu'il est fixé à celui-ci avec un isolement thermique réalisé par une ou plusieurs rondelles isolantes ou d'étoupage (24) montées entre le pied (22) et l'élément de mesure (2).

10. Thermocouple d'après une des revendications 1 à 9,
**caractérisé en ce que**
sur la face donnant sur la tête de raccordement (6), le tube de support (21) est fixé à la tête de raccordement (6) avec un isolement thermique réalisé par une ou plusieurs rondelles isolantes ou d'étoupage (27) montées entre celle-ci et le tube de support (21).

11. Thermocouple d'après une des revendications 1 à 10,
**caractérisé en ce que**
sur la face donnant sur la tête de raccordement (6), le tube de support (21) s'appuie de manière résistant à la torsion sur le tube protecteur (11).

12. Thermocouple d'après la revendication 11,
**caractérisé en ce que**
pour la fixation anti-torsion du tube de support (21), celui-ci est muni d'une bride partiellement ouverte (28) possédant une ou plusieurs rainures (29) dans lesquelles s'engrène le tube protecteur (11) à l'aide de respectivement un embout (12) saillant axialement du bord extérieur.

13. Thermocouple d'après une des revendications 1 à 12,
**caractérisé en ce que**
le tube protecteur (11) est réalisé en matériau étanche aux gaz et résistant à la chaleur tel que du carbure de silicium.
